# NEUE EUROPÄISCHE PATENTSCHRIFT

(11) **EP 2 185 447 B2**
(45) Veröffentlichungstag und Bekanntmachung des Hinweises auf die Entscheidung über den Einspruch: **19.10.2016**
(45) Hinweis auf die Patenterteilung: 13.03.2013
(21) Anmeldenummer: 08803332.9
(22) Anmeldetag: 28.08.2008
(51) Int. Cl.: B65G 1/04

(54) **LAGERREGAL MIT TRANSPORTVORRICHTUNG**
STORAGE SHELF HAVING TRANSPORT DEVICE
RAYONNAGE DE STOCKAGE DOTÉ D'UN DISPOSITIF DE TRANSPORT

(30) Priorität: 29.08.2007 DE 102007040863
(43) Veröffentlichungstag der Anmeldung: 19.05.2010
(73) Patentinhaber: Hänel & CO., 9450 Altstätten (CH)
(72) Erfinder: HÄNEL, Joachim, 74177 Bad Friedrichshall (DE)
(74) Vertreter: Flügel Preissner Schober Seidel
(86) Internationale Anmeldenummer: PCT/EP2008/061320
(87) Internationale Veröffentlichungsnummer: WO 2009/027479

(56) Entgegenhaltungen:
- WO-A-2007/042381
- DE-U1- 29 821 103
- DE-U1-202007 003 084
- FR-A- 2 686 327
- US-A1- 2007 134 077

## Beschreibung

Die vorliegende Erfindung betrifft ein Lagerregal mit einer Vielzahl von Regaleinheiten, die übereinanderliegende und beabstandete Behälterauflagen aufweisen, die paarweise an sich gegenüberliegenden Seitenwänden der Regaleinheiten zur Bildung von Lagerplätzen für Behälter angeordnet sind. Diese Behälter sind den Lagerplätzen mittels einer steuerbaren Transportvorrichtung zustellbar oder entnehmbar. Die Transportvorrichtung weist wenigstens ein erstes Transportmittel und ein zweites Transportmittel auf, wobei das erste Transportmittel in der Vertikalrichtung verfahrbar ist und sich das zweite Transportmittel auf dem ersten Transportmittel abstützt und bezüglich dem ersten Transportmittel in einer ersten Horizontalrichtung verfahrbar ist.

Ein derartiges Lagerregal ist aus der DE 10 2005 048 379 A1 und der WO 2007/042381 A1 bekannt. Dieses Lagerregal lässt sich in einfacher Weise an veränderte Raumsituationen anpassen. Dies wird insbesondere dadurch möglich, dass das erste in Modulbauweise aufgebaute Transportmittel auf einfache Weise nachträglich erweiterbar oder reduzierbar ist und dementsprechend die Regaleinheiten des Lagerregals angepasst werden können. Das zweite in Horizontalrichtung verfahrbare Transportmittel ist entsprechend eingerichtet, um einen Lagergutträger in den gewünschten Lagerplatz zwischen zwei Seitenwänden ein- oder aus diesem Lagerplatz auszulagern.

Die US 2007/0134077 A1 offenbart ein Lagerregal als der bisberige Stand der Technik mit einem Transportmittelsystem zum Ein- und Auslagern von Artikeln oder Behältern. Eine Transportvorrichtung hat wenigstens zwei fingerartige Transportmittel, die voneinander beabstandet sind und wobei der Abstand derart gewählt ist, dass die Transportmittel zwischen Rohren des Lagerregalrahmens in Behälter erfassen können. Jedes der Transportmittel umfasst ein Transportband und mehrere mit Zähnen und Nuten versehene Scheiben, wobei die Scheiben das Transportband antreiben und den Behälter mittels einer Zahnstruktur greifen.

Die DE 20 2007 003 084 U1 betrifft einen aus Kunststoff bestehenden Lagergutträger mit einer umlaufenden Wandung und seitlich abragenden Abstützungen. Die FR 2 686 327 betrifft ein Lagerregal für CD's mit einer verfahrbaren Transportvorrichtung, einer auf- und abbewegbaren Transportvorrichtung sowie einer Greifvorrichtung zum Ein- und Auslagern.

Ferner ist aus der DE 42 20 116 C2 ein mittels eines Hubschlitten verfahrbares Regalbediengerät bekannt, mit dem mehrere Behälter ein- und ausgelagert werden können. Zur Beförderung der Behälter ist eine aufwändige Konstruktion aus Bändern, Gegendrucklatten und Schiebern erforderlich.

Insbesondere bei so genannten automatischen Kleinteilelagern ergibt sich häufig die Problematik, dass in rascher zeitlicher Abfolge verschiedene Kleinteiltypen benötigt werden, die jeweils in unterschiedlichen Behältern an unterschiedlichen Lagerplätzen innerhalb des Lagerregals eingelagert sind. Daher sind in der Regel mehrere Bedienfahrten hintereinander erforderlich, um die verschiedenen Behälter mit den angeforderten Kleinteiltypen der Bedienöffnung des Lagerregals zuzustellen. Ferner sind die innerhalb des Lagerregals verfahrbaren Transportvorrichtungen häufig sehr aufwändig konstruiert und unveränderbar in das Lagerregal eingebunden. Diese Transportvorrichtungen sind in den meisten Fällen nur für darauf abgestimmte Regaltypen einsetzbar.

Der Erfindung liegt die **Aufgabe** zugrunde, ein Lagerregal anzugeben, bei dem die Zugriffszeiten für die Ein- und Auslagerung der Behälter reduziert werden, zugleich aber ein sich an veränderte Raumsituationen anpassbares Lagerregal geschaffen wird.

Zur **Lösung** dieser Aufgabe ist ein Lagerregal mit den Merkmalen gemäß Patentanspruch 1 vorgesehen.

Das erfindungsgemäße Lagerregal beruht auf der Erkenntnis, eine Übergabevorrichtung mit mehreren Übergabeeinheiten zur Handhabung von mehreren Behältern auszubilden, um mehrere Behälter, vorzugsweise gleichzeitig und/oder in benachbarter Lage bearbeiten zu können. In bevorzugter Ausgestaltung wird ein gleichzeitiges Ein- und Auslagern von mehreren Behältern, insbesondere von vier Behältern, möglich. Auf diese Weise werden die Zugriffszeiten bei der Zusammenstellung von in den Behältern gelagerten Kleinteilen reduziert.

Das erfindungsgemäße Lagerregal zeichnet sich insbesondere dadurch aus, dass durch das Einlagern beziehungsweise Auslagern mehrerer Behälter schnellere Zugriffszeiten, d.h. kürzere Zustell- oder Entnahmezeiten, erreicht werden. Insbesondere können mehrere Behälter gleichzeitig ein- oder ausgelagert werden. Ferner können die Behälter ohne zusätzliche Ladungsträger befördert und auch Behälter mit unterschiedlichen Höhen eingesetzt werden.

Unter einem "Behälter" wird im Rahmen der vorliegenden Erfindung ein Lagergutträger verstanden, der das Lagergut stützen und lagern kann. Beispielsweise handelt es sich bei dem Behälter um einen Container oder um einen Lagergutträger. Es können auch unterschiedliche Behältertypen, beispielsweise mit unterschiedlichen Abmessungen, insbesondere unterschiedlichen Höhenabmessungen, in dem Lagerregal eingesetzt werden.

Die vorliegende Erfindung wird bevorzugt als vollautomatisches Kleinteilelager eingesetzt.

Vorteilhafte Ausgestaltungen des erfindungsgemäßen Lagerregals sind in den abhängigen Ansprüchen beansprucht.

Bei einer bevorzugten Ausführungsform ist die Übergabevorrichtung aus mehreren modulartig lösbar miteinander verbindbaren Übergabeeinheiten ausgebildet, wobei die Anzahl der Übergabeeinheiten in Abhängigkeit von der Anzahl der Regaleinheiten variierbar ist.

Von Vorteil ist ferner, wenn zusätzlich oder alternativ das erste Transportmittel aus mehreren lösbar miteinander verbundenen Transportmittelmodulen gebildet ist, deren Anzahl in Abhängigkeit von der Anzahl der Regaleinheiten variierbar ist.

Weiter ist es vorteilhaft, wenn die Anzahl der Übergabeeinheiten in Abhängigkeit von der Anzahl der Regaleinheiten und/oder in Abhängigkeit von der Anzahl der Transportmittelmodule variierbar ist.

Bei einer weiteren bevorzugten Ausführungsform sind die Übergabeeinheiten als Greifeinheiten und/oder Zieheinheiten ausgebildet. Hierbei können die zugehörigen Greif- und/oder Ziehmittel von einem oder mehreren Antriebsmitteln bewegt werden. Beispielsweise kann ein Antrieb mehrere dieser Mittel antreiben, so dass die ein- oder auszulagernden Behälter parallel von den Lagerplätzen zu dem zweiten Transportmittel oder umgekehrt befördert werden können.

Erfindungsgemäß ist die Übergabeeinheit derart beschaffen und eingerichtet, um den jeweiligen Behälter in einer zweiten Horizontalrichtung zu verfahren, die im Wesentlichen senkrecht zur ersten Horizontalrichtung verläuft. Vorzugsweise entspricht diese zweite Horizontalrichtung einer zum Transportschacht zwischen zwei Regalreihen quer verlaufenden Richtung.

Vorteilhaft sind die Übergabeeinheiten eingerichtet, um die Behälter zumindest gruppenweise synchron oder nacheinander ein- oder auszulagern. So können bei einer Übergabevorrichtung mit beispielsweise vier Übergabeeinheiten in einem ersten Schritt zunächst eine Gruppe von zwei in benachbarten Lagerplätzen eingelagerten Behältern gleichzeitig aus den Lagerplätzen auf das zweite Transportmittel und in einem zweiten Schritt dementsprechend eine zweite Gruppe von zwei weiteren Behältern in einer anderen Höhenlage des Lagerregals ebenfalls synchron aus den benachbarten Lagerplätzen auf das zweite Transportmittel befördert werden.

Vorteilhaft sind vier Übergabeeinheiten vorgesehen, die vorzugsweise als Greifeinheiten ausgebildet sind und beispielsweise vier in benachbarten Lagerplätzen einer Lagerebene befindliche Behälter synchron aus den Lagerplätzen auf das zweite Transportmittel oder umgekehrt befördern.

Das Lagerregal umfasst wenigstens eine Bedienöffnung zur Beschickung und Entnahme der Behälter. Es können aber auch mehrere Bedienöffnungen vorgesehen werden. Vorteilhaft ist im Bereich der Bedienöffnung eine Höhenmesseinrichtung zur Höhenmessung der Behälter vorgesehen. Die Höhenmesseinrichtung kann die Anzahl der für die Lagerung des Behälters notwendigen Höheneinheiten in einer bestimmten Regaleinheit ermitteln. So kann das Messsignal der Höhenmesseinrichtung einer Steuereinheit der Transportvorrichtung zugeführt werden, die in Abhängigkeit von der Belegung des Lagerregals und der Höhe des Behälters diesen zu einem geeigneten Lagerplatz verfährt und zustellt.

Weiterhin kann die Höhenmesseinrichtung bei mehreren, in der Bedienöffnung vorhandenen Behältern, denjenigen Behälter ermitteln, der die größte Höhe aufweist. Hierzu können auch mehrere Höhenmesseinrichtungen eingesetzt werden. Sodann ermittelt die Steuereinheit einen Bereich des Lagerregals, bei dem in benachbarten, einer der Anzahl der Behälter entsprechenden Anzahl von Lagerplätzen zumindest ein Lagerplatz mit ausreichender Lagerplatzhöhe zur Unterbringung des Behälters mit der größten Höhe vorhanden ist. Daraufhin können sämtliche in der Bedienöffnung bereitgestellten Behälter durch eine einzelne Bedienfahrt gleichzeitig den ermittelten benachbarten Lagerplätzen zugestellt werden.

Ferner können auch in anderen Fällen mehrere Höhenmesseinrichtungen vorgesehen werden, wodurch die Höhe jedes einzelnen Behälters im Bereich der Bedienöffnung erfasst werden kann. Es ist auch möglich, die mehreren Behälter unterschiedlicher Höhe in einen Bereich des Lagerregals zu verfahren, der Lagerplätze aufweist, wobei die einzelnen Höhen der benachbarten Lagerplätze ausreichend sind, um die einzelnen Behälter in benachbarter Anordnung einzulagern.

Die Bedienöffnung ist derart dimensioniert, dass alle Behälter gleichzeitig ausgelagert und/oder eingelagert werden können. Für den Fall, dass das Lagerregal durch Hinzufügen oder Entfernen von Regaleinheiten erweitert oder verkleinert werden sollte, kann dementsprechend auch die Bedienöffnung größenmäßig variiert werden. Diese Veränderung kann auch auf die Anzahl der Übergabeeinheiten und/oder die Anzahl der Transportmittelmodule abgestimmt werden. Auf diese Weise kann ein Lagerregalbausatz erhalten werden, bei dem Regaleinheiten, Bedienöffnung, Transportvorrichtung, insbesondere die Module des ersten und/oder zweiten Transportmittels, und die Übergabeeinheiten aufeinander abstimmbar zusammenstellbar sind.

Um beispielsweise ein zwischenzeitliches Öffnen und Schließen der Bedienöffnung zu ermöglichen, kann in vorteilhafter Ausgestaltung im Bereich der Bedienöffnung eine Verschlusseinrichtung, insbesondere ein Schnelllauftor vorgesehen werden. Auf diese Weise wird verhindert, dass über die Bedienöffnung Schmutz in das Lagerregal eindringt. Ein derartiges Schnelllauftor kann beispielsweise im Bereich des inneren Endes der Bedienöffnung angeordnet werden, so dass nach einer Bedienfahrt die auszulagernden Behälter sich noch in der Bedienöffnung befinden und durch das Bedienpersonal weiterbearbeitet werden können, jedoch die Verschlusseinrichtung bereits geschlossen ist.

Vorteilhaft sind die Behälterauflagen rasterartig an den Seitenwänden vorgesehen. Durch Vorgabe eines bestimmten Rastermaßes und Hinterlegung dieses Rasters in der Steuereinheit der Transportvorrichtung kann insbesondere in Verbindung mit der oben genannten Höhenmesseinrichtung ein für eine bestimmte Behälterhöhe ausreichender Lagerplatz zugeordnet werden. Vorteilhafter Weise sind die Behälterauflagen mäanderförmig in die Seitenwände eingepresst. Die Seitenwände sind insbesondere aus Stahlblech hergestellt und zweckmäßiger Weise mit vertikalen Ständern verschweißt. Von Vorteil ist ferner, wenn die Behälterauflagen Nuten aufweisen, in die Auflagestege der Behälter ein- und ausführbar sind. Derartige Auflagestege können an den Seitenwänden der Behälter, vorzugsweise im unteren Endbereich, angebracht sein. Als besonders vorteilhaft hat sich ein Raster von 25 mm erwiesen.

Bei einer weiteren bevorzugten Ausführungsform sind das erste Transportmittel, das zweite Transportmittel und/oder die Übergabeeinheiten beziehungsweise die Übergabevorrichtung mittels eines Zahnradantriebes und/oder eines Kettenantriebes verfahrbar. Hinsichtlich der genaueren Ausgestaltung dieser Antriebe wird auf die DE 10 2005 048 379 A1 verwiesen.

Nachfolgend wird die Erfindung unter Bezugnahme auf die Zeichnungen weiter erläutert. Dabei zeigen schematisch:
- Fig. 1: eine perspektivische Darstellung des erfindungsgemäßen Lagerregals mit einer Transportvorrichtung;
- Fig. 2: eine perspektivische ausschnittsweise Darstellung der Transportvorrichtung gemäß Fig. 1 in vergrößerter Darstellung;
- Fig. 3: eine Ansicht des Lagerregals mit angedeuteter Darstellung der Behälterauflagen und der ein- und auszulagernden Behälter;
- Fig. 4: einen Ausschnitt aus Figur 3 in vergrößerter Darstellung;
- Fig. 5: einen Querschnitt durch die Transportvorrichtung gemäß der Linie V-V in Fig. 2;
- Fig. 6: einen Längsschnitt durch die Transportvorrichtung;
- Fig. 7: eine Ansicht von oben auf das erste Transportmittel, und
- Fig. 8: eine Seitenansicht des ersten Transportmittels.

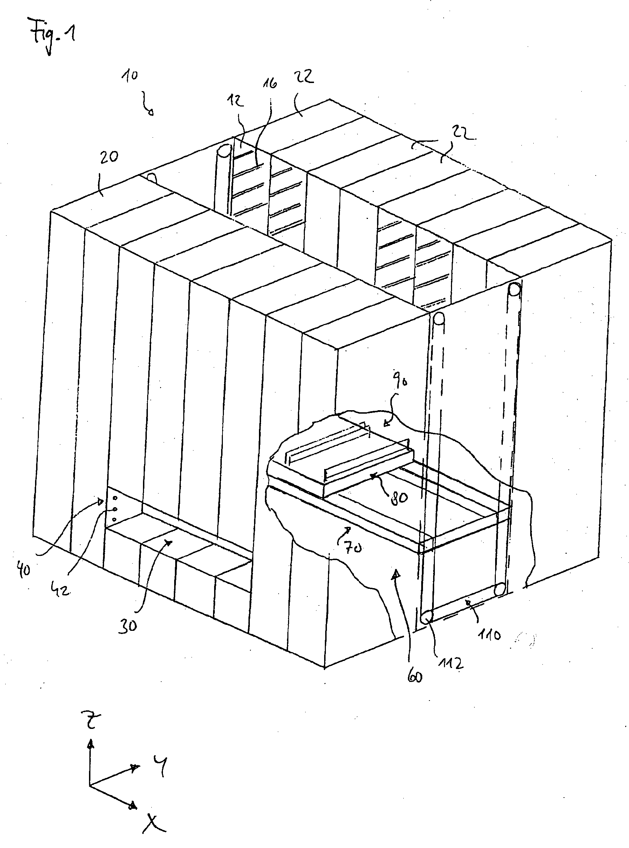

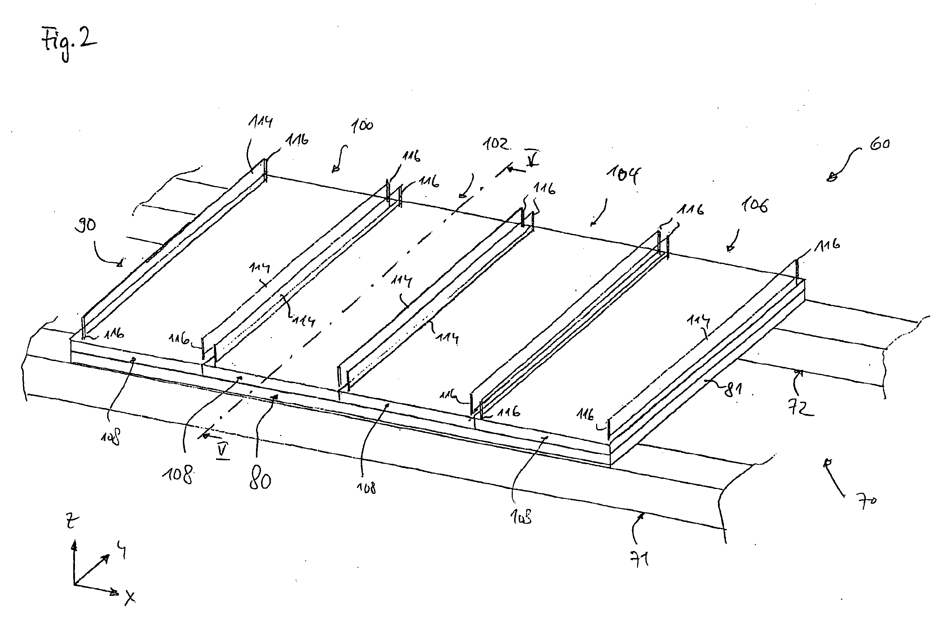

Fig. 1 zeigt den schematischen Aufbau eines erfindungsgemäßen Lagerregals 10 in Form eines Kleinteilelagers mit 16 Regaleinheiten 20, 22, wobei in einer ersten Reihe acht Regaleinheiten 20 und in einer zweiten Reihe acht Regaleinheiten 22 nebeneinander angeordnet sind. Zwischen diesen beiden beabstandeten Reihen ist eine Transportvorrichtung 60 zum Ein- und Auslagern von Behältern in einem Transportschacht bewegbar angeordnet. Im vorliegenden Ausführungsbeispiel werden beispielhaft vier einzulagernde Behälter 50, 51, 52, 53 und vier auszulagernde Behälter 54, 55, 56, 57 bearbeitet (siehe Fig. 2). Es kann jedoch auch eine andere Anzahl von Behältern bearbeitet werden.

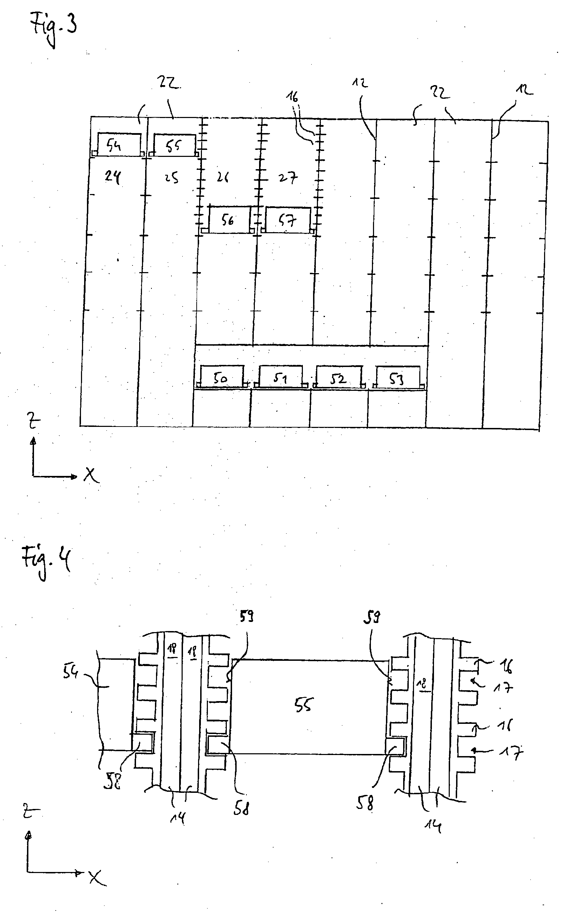

Um die einzulagernden Behälter 50 bis 53 in entsprechende Lagerplätze einbeziehungsweise auslagern zu können, weisen die Regaleinheiten 20, 22 Seitenwände 12 mit an senkrecht verlaufenden Ständern 14 paarweise gegenüberliegend angebrachten Behälterauflagen 16 auf (siehe Fig. 3, 4). Die aus Stahlblech gebildeten Seitenwände 70 sind jeweils an die Ständer 14 angeschweißt. Jeder Behälter umfasst an zwei gegenüberliegenden Seitenflächen 59 jeweils einen Auflagesteg 58, der den Behälter auf jeweils zwei Behälterauflagen 16 abstützt.

Wie aus Fig. 4 hervorgeht, sind die Behälterauflagen 16 in der jeweiligen Seitenwand 12 integriert und in diese mäanderförmig eingepresst. Dadurch wird eine vergleichsweise steife Ausbildung der Seitenwände 12 gewährleistet. Um ein leichtes Einführen der Behälter 50 bis 53 in die Lagerplätze 24 bis 27 zu ermöglichen, weisen die Behälterauflagen 16 an der zur Transportrichtung 60 gerichteten Seite einen sich verjüngenden Querschnitt auf. Zwischen jeweils zwei benachbarten von den Seitenwänden 12 abragenden Behälterauflagen 16 wird jeweils eine Nut 17 zur Aufnahme des Auflagesteges 58 eines Behälters gebildet.

Fig. 1 zeigt zudem eine Bedienöffnung 30, die es ermöglicht, das Lagerregal 10 mit den Behältern 50 bis 53 zu beschicken, beziehungsweise die Behälter 54 bis 57 aus dem Lagerregal 10 zu entnehmen. Um eine optimale Lagerplatznutzung zu erreichen, ist im Bereich der Bedienöffnung 30 eine Höhenmesseinrichtung 40 zur Höhenmessung der Behälter 50 bis 57 vorgesehen. Die Höhenmesseinrichtung 40 ist mit mehreren Lichtschranken 42 ausgestattet, die in einem dem Abstand der übereinanderliegenden Behälterauflagen 16 entsprechenden Abstand voneinander beabstandet sind, so dass die Anzahl der erforderlichen Höheneinheiten zur Lagerung des jeweiligen Behälters 50 bis 57 ermittelbar ist. Eine Steuereinheit ermittelt die für die einzelnen Behälter 50 bis 57 erforderlichen Einlagerungshöhen und ermittelt bevorzugt mehrere benachbarte Lagerplätze 24 bis 27, um so die mehreren Behälter 50 bis 53 gleichzeitig entsprechenden Lagerplätzen zustellen zu können.

Zur Zustellung oder Entnahme eines Behälters 50 bis 57 ist die steuerbare Transportvorrichtung 60 so eingerichtet, dass die Behälter 50 bis 57 in einer ersten Raumrichtung Z, in einer zweiten Raumrichtung X und in einer dritten Raumrichtung Y transportierbar sind. Die drei Raumrichtung X, Y, Z stehen in vorliegendem Ausführungsbeispiel rechtwinklig zueinander. Im Folgenden wird die Raumrichtung Z auch als Vertikalrichtung, die Raumrichtung X auch als Längsrichtung und die Raumrichtung Y auch als Querrichtung bezeichnet (siehe Fig. 1).

Um den Transport der Behälter 50 bis 57 in die Vertikal-, Längs- und Querrichtung zu ermöglichen, weist die Transportvorrichtung 60 ein erstes Transportmittel 70 und ein zweites Transportmittel 80 sowie eine Übergabevorrichtung 90 auf (siehe insbesondere Fig. 1, 2 und 6).

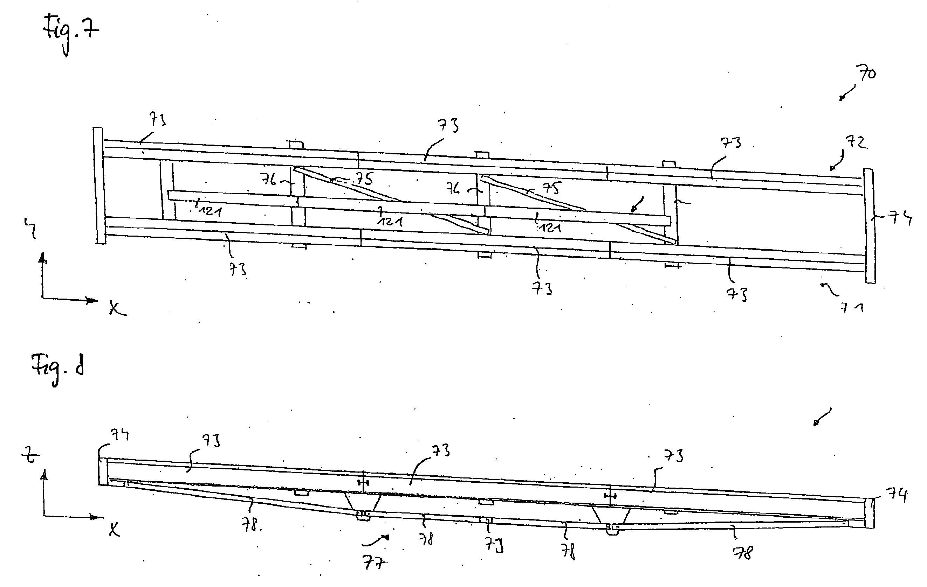

Das erste Transportmittel 70 ist nach Art einer Hubbühne aufgebaut, mittels eines Antriebes in der Vertikalrichtung Z verfahrbar und weist zwei parallel zueinander ausgerichtete Träger 71, 72 auf. Wie die Figuren 7 und 8 zeigen, ist jeder Träger 71, 72 aus mehreren miteinander verschraubten Trägermodulen 73 zusammengesetzt. Dadurch wird eine lösbare Verbindung der Trägermodule 73 bereitgestellt.

Das erste Transportmittel 70 weist zwei Vorspannelemente 77 auf, die sich an der Unterseite der Träger 71, 72 erstrecken. Jedes Vorspannelement 77 weist vier Vorspannmodule 78 in Form von Zugstangen auf. Im mittleren Bereich des Vorspannelementes 77 ist ein Spannschloss 79 zur Regulierung der durch das Vorspannelement 77 zu erzeugenden Vorspannung vorgesehen. Die Spannkraftjustierung kann aber zusätzlich oder alternativ in den Endbereichen der Endmodule des Vorspannelements 77 erfolgen. Das Vorspannelement 77 verläuft im mittleren Bereich in einem Abstand von den Trägern 71, 72. So kann infolge des sich ergebenden Hebelarms ein Drehmoment erzeugt werden, das entgegengesetzt zu dem durch das Gewicht der Transportvorrichtung 60 und die Behälter 50 bis 57 erzeugte Drehmoment wirkt. Dies führt zu einer Verringerung der Durchbiegung des Trägers 71, 72 und ermöglicht eine größere Lastaufnahme des Trägers 71, 72 im Vergleich zu einem Träger ohne Vorspannelement 77.

Bei der Montage der Träger 71, 72 werden die einzelnen Trägermodule 73 miteinander verschraubt. An der Unterseite der Träger 71, 72 wird an den Verbindungsstellen der Trägermodule 73 jeweils ein Verbindungsarm angeordnet, an dessen Endbereich das Vorspannelement 77 beabstandet von den Trägern 71, 72 festgelegt wird. Ferner weist das erste Transportmittel 70 zwei schräg verlaufende Aussteifungselemente 75 und zwei in den Endbereichen der Träger 71, 72 vorgesehene Querträger 74 auf (siehe Fig. 7, 8).

Aus Fig. 1 ist weiterhin zu erkennen, dass das erste Transportmittel 70 mit einem Antrieb ausgestattet ist, der insgesamt vier Kettenantriebe mit jeweils einer Kette 110 und zwei Antriebswellen 112 aufweist, die von einem nicht dargestellten Antriebsmotor horizontal abragen. Um eine Anpassung an unterschiedliche Längen des Lagerregals 10 zu ermöglichen, kommen Antriebswellen 112 unterschiedlicher Länge zum Einsatz.

Um während der Bewegung des ersten Transportmittels 70 ein Schwenken der Träger 71, 72 in Querrichtung Y zu vermeiden, sind an den Querträgern 71, 72 und den Streben 76 mehrere Räder 19 vorgesehen, die sich an den Vertikalträgern der Regaleinheiten 20, 22 abstützen.

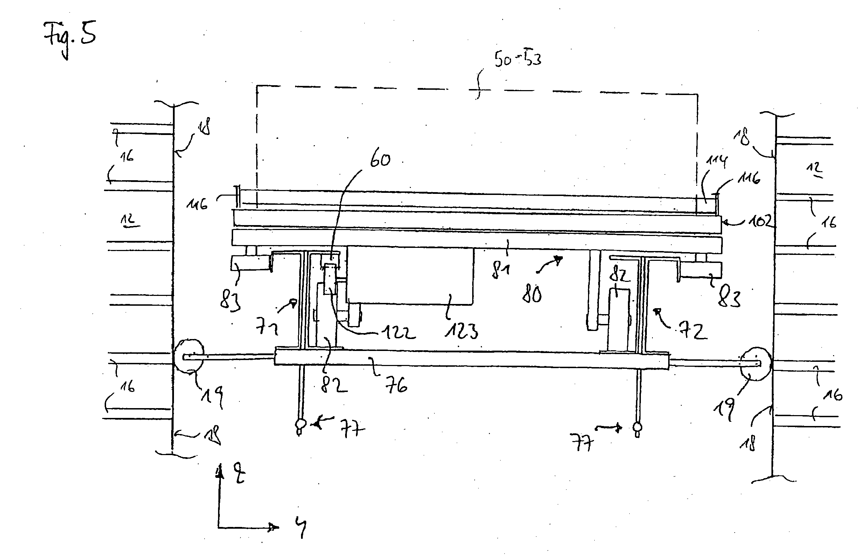

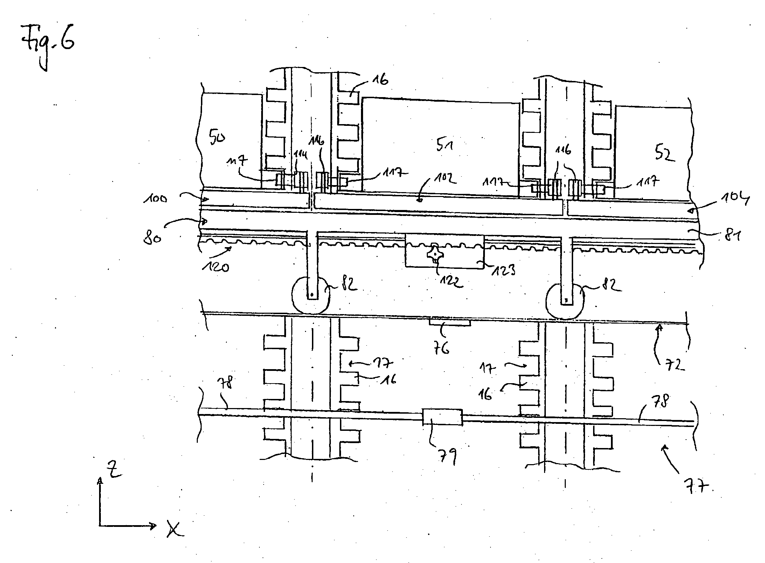

Wie insbesondere den Fig. 5 und 6 zu entnehmen, weist das zweite Transportmittel 80 ein Fahrgestell 81 sowie mehrere Räder 82 auf. Auf diese Weise ist das zweite Transportmittel 80 in der Längsrichtung X zwischen den beiden Regaleinheiten 20, 22 verfahrbar. Hierzu kann ein Zahnstangenantrieb vorgesehen werden, der die sich an der ersten Transporteinrichtung 70 abstützenden Räder 82 antreibt.

Der Zahnstangenantrieb umfasst eine aus mehreren Zahnstangenmodulen 121 gebildete Zahnstange 120, ein mit der Zahnstange 120 zusammenwirkendes Zahnrad 122 und einen Motor 123 für den Antrieb des Zahnrades 122 auf. Durch die Modulbauweise der Zahnstange 120 kann diese ebenfalls an das erste Transportmittel 70 mit unterschiedlicher Länge angepasst werden. Die Zahnstangenmodule 121 sind auf den Streben 76 des ersten Transportmittels 70 gelagert. Das Zahnrad 122 und der Motor 123 sind derart an dem Fahrgestell 81 angebracht, dass die Zähne des Zahnrades 122 mit den Zähnen der Zahnstange 120 in einen Griff gelangen können (siehe Fig. 6).

Zur Führung des zweiten Transportmittels 80 dienen einerseits die auf einem Flansch des Trägers 71, 72 verfahrbaren Räder 82. Zusätzliche Räder 83 greifen an vertikal ausgerichteten Flanschen des Trägers 71, 72 an und dienen als seitliche Führung des Fahrgestells 81 an den Trägern 71, 72.

Die an der Transportvorrichtung 60 vorgesehene Übergabevorrichtung 90 umfasst zur Handhabung der Behälter 50 bis 57 bei der vorliegenden Ausführungsform beispielhaft vier Übergabeeinheiten 100, 102, 104 und 106. Mittels dieser vier Übergabeeinheiten 100 bis 106 wird nachfolgend entsprechend der in Fig. 3 gezeigten Situation mit den vier im Bereich der Bedienöffnung 30 befindlichen einzulagernden Behältern 50, 51, 52 und 53 ein Ablauf zur Einlagerung der Behälter 50 bis 53 beschrieben.

Nach Einbringen der Behälter 50 bis 53 in die Bedienöffnung 30 ermittelt die Höhenmesseinrichtung 40 die Höhen aller Behälter 50 bis 53. Vorliegend haben alle vier Behälter die gleiche Höhe. Anschließend ermittelt die Steuereinheit einen Bereich in einer der Regaleinheiten 20, 22, in dem vorzugsweise vier nebeneinander liegende freie Lagerplätze vorhanden. Hier werden beispielhaft die Lagerplätze 24, 25, 26 und 27 in der Regaleinheit 22 ermittelt (siehe Fig. 3).

Die Übergabevorrichtung 90 ist derart eingerichtet, dass jeder Übergabeeinheit 100 bis 106 jeweils ein Behälter 50 bis 53 zugeordnet werden kann. Im vorliegenden Fall weisen alle vier Übergabeeinheiten 100 bis 106 jeweils eine Tragplatte 108 auf, die jeweils auf dem Fahrgestell 81 des zweiten Transportmittels 80 abgestützt sind. Diese Tragplatten 108 sind voneinander getrennt gelagert und auch separat und unabhängig voneinander in der Horizontalrichtung X verfahrbar.

Bei einer anderen Variante, können die Übergabeeinheiten 100 bis 106 auf einer gemeinsamen Tragplatte gelagert und nur zusammen verfahrbar sein. Generell können mehrere Tragplatten 108 vorgesehen sein, die in Längsrichtung X oder in Querrichtung Y nebeneinander positioniert werden können und in Längsrichtung X und/oder Querrichtung Y verfahrbar sein können und zwar unabhängig voneinander oder gruppenweise. Weiterhin können beispielsweise auch zwei Übergabeeinheiten auf einer Tragplatte 108 abgestützt und zusammen verfahrbar sein. Ferner ist jede Übergabeeinheit 100 bis 106 mit einem Antrieb ausgestattet, der separat ansteuer- und bewegbar ist.

Wie insbesondere in den Fig. 2 und 6 gezeigt, ist beim vorliegenden Ausführungsbeispiel jeder Antrieb durch zwei Antriebseinheiten gebildet, wobei jede Antriebseinheit eine Kette 114 und zwei Antriebswellen 116 umfasst. An jeder Kette 114 ist wenigstens ein Mitnehmer 117 vorgesehen, um so die Behälter greifen zu können. Vorzugsweise greifen die Mitnehmer 117 in entsprechende Nuten in den Auflagestegen 58 der Behälter ein.

Mit anderen Worten greifen jeweils zwei Antriebseinheiten an einem Behälters 50 bis 53 an, um diesen von der Ablagefläche der Bedienöffnung 30 auf die Tragplatte 108 der jeweiligen Übergabeeinheit 100 bis 106 zu ziehen. Die

Übergabeeinheiten 100 bis 106 bewegen die Behälter 50 bis 53 also gleichzeitig in Querrichtung Y.

Nachdem die Behälter 50 bis 53 von der Übergabevorrichtung 90 aus der Bedienöffnung 30 aufgenommen worden sind, können die Behälter 50 bis 53 nun mittels der Transportvorrichtung 60 entlang des Transportschachtes in Längsrichtung X und Vertikalrichtung Z verfahren werden. Nach Erreichen der von der Steuereinheit zugeteilten Position schieben die Übergabeeinheiten 100 bis 106 die Behälter 50 bis 53 in die Lagerplätze 24 bis 27 (siehe Fig. 3).

Nachdem nun die Behälter 50 bis 53 in den Lagerplätzen 24 bis 27 eingelagert worden sind, kann im direkten Anschluß die Auslagerung der Behälter 54, 55, 56, 57 erfolgen (siehe Fig. 3). Nach Verfahren der Transportvorrichtung 60 auf Höhe der Behälter 54, 55, zieht die Übergabevorrichtung 90 mittels der Übergabeeinheiten 100 und 102 die zwei Behälter 54, 55 gleichzeitig aus den Lagerplätzen auf das zweite Transportmittel 80. Dann wird das erste Transportmittel 70 in Vertikalrichtung Z nach unten verfahren, bis die Transportvorrichtung 60 auf Höhe der Behälter 56, 57 gelangt ist und zieht dort die zwei weiteren Behälter 56, 57 mittels der Übergabeeinheiten 104, 106 aus den Lagerplätzen auf das zweite Transportmittel 80.

Anschließend wird die Transportvorrichtung 60 auf Höhe der Bedienöffnung 30 verfahren, wobei das zweite Transportmittel 80 in Längsrichtung X derart positioniert wird, dass daraufhin alle vier Behälter 54 bis 57 gleichzeitig in die Bedienöffnung 30 geschoben werden können.

Das Ziehen und Schieben der Behälter 54 bis 57 erfolgt gleichermaßen wie oben beim Einlagern der Behälter 50 bis 53 erläutert mit den Antriebseinheiten der Übergabeeinheiten 100 bis 106, das heisst mittels der Kettenantriebe als Greif-/Zieheinheiten.

Die beschriebene Ausführungsform zeichnet sich insbesondere dadurch aus, dass durch das Einlagern beziehungsweise Auslagern mehrerer Behälter 50 bis 53 beziehungsweise 54 bis 57 schnellere Zugriffszeiten, d.h. kürzere Zustell- oder Entnahmezeiten erreicht werden. Besonders bevorzugt werden die Behälter gleichzeitig der Bedienöffnung 30 zugestellt oder aus dieser zu den Lagerplätzen befördert. Weiterhin kann die Übergabevorrichtung 90 modulartig durch Hinzufügen oder Entfernen von einzelnen Übergabeeinheiten gestaltet und so an die flexibel veränderbare Kapazität des Lagerregals 10 angepasst werden. Für den Fall, dass Regaleinheiten 20, 22 hinzugefügt oder entfernt und dementsprechend das erste Transportmittel 70 modulartig mittels der Trägermodule/Transportmittelmodule 73 angepasst wird, kann in Abstimmung hierzu die Anzahl der Übergabeeinheiten variiert werden, so dass eine optimale Bedienung des Lagerregals erreicht werden kann.

Im oben erläuterten Ausführungsbeispiel sind alle vier Übergabeeinheiten 100 bis 106 auf dem zweiten Transportmittel 80 abgestützt und somit gemeinsam entlang der Längsrichtung X auf dem ersten Transportmittel 70 verfahrbar. Grundsätzlich kann aber auch eine Gruppe von Übergabeeinheiten, beispielsweise zwei Übergabeeinheiten, getrennt von einer weiteren Gruppe von Übergabeeinheiten auf dem zweiten Transportmittel 80 verfahrbar gelagert sein.

In Folge der oben erläuterten Ausgestaltung der Übergabevorrichtung 90 mit den mehreren Übergabeeinheiten 100 bis 106 kann eine Gruppe von mehreren Behältern 50 bis 53, insbesondere von vier Behältern, gleichzeitig den Lagerplätzen zugestellt oder aus diesen entnommen werden. So können entweder alle vier Behälter 50 bis 53 in einer horizontalen Ebene in benachbarten Regaleinheiten eingeschoben werden. Es ist jedoch auch möglich, zunächst eine Gruppe von beispielsweise zwei Behältern in zwei benachbarte oder aber beabstandete Lagerplätze einer Ebene und in einem zweiten Schritt eine zweite Gruppe von zwei Behältern in benachbarte oder beabstandete Lagerplätze einer zweiten Ebene einzulagern.

Schließlich können auch unterschiedlich hohe Behälter 50 bis 57 eingesetzt werden, da die Seitenwände 12 vorzugsweise rasterförmig gestaltet sind, und mittels der oben beschriebenen Höhenmessung die jeweils geeigneten Lagerplätze ermittelt werden können. Ferner können die Behälter 50 bis 57 ohne zusätzliche Ladungsträger befördert werden. In bevorzugter Ausgestaltung ist das gleichzeitige Ein- beziehungsweise Auslagern von vier Behältern 50 bis 53 beziehungsweise 54 bis 57 möglich. Als Behälter 50 bis 57 können übliche Kleinladungsträger, gegebenenfalls auch mit unterschiedlichen Höhen, und beispielsweise mit bis zu 50 kg Zuladung eingesetzt wer

### Bezugszeichenliste

- 10: Lagerregal
- 12: Seitenwand
- 14: Ständer
- 16: Behälterauflage
- 17: Nut
- 18: Stirnfläche
- 19: Rad
- 20: Regaleinheit
- 22: Regaleinheit
- 24: Lagerplatz
- 25: Lagerplatz
- 26: Lagerplatz
- 27: Lagerplatz
- 30: Bedienöffnung

- 40: Höhenmesseinrichtung
- 42: Lichtschranke

- 50: Behälter
- 51: Behälter
- 52: Behälter
- 53: Behälter
- 54: Behälter
- 55: Behälter
- 56: Behälter

- 57: Behälter
- 58: Auflagesteg
- 59: Seitenfläche

- 60: Transportvorrichtung

- 70: erstes Transportmittel
- 71: Träger
- 72: Träger
- 73: Trägermodul
- 74: Querträger
- 75: Aussteifungselement
- 76: Strebe
- 77: Vorspannelement
- 78: Vorspannmodul
- 79: Spannschloss

- 80: zweites Transportmittel
- 81: Fahrgestell
- 82: Rad
- 83: Rad

- 90: Übergabevorrichtung

- 100: Übergabeeinheit
- 102: Übergabeeinheit
- 104: Übergabeeinheit

- 106: Übergabeeinheit
- 108: Tragplatte
- 110: Kette
- 112: Antriebswelle
- 114: Kette
- 116: Antriebswelle
- 117: Mitnehmer

- 120: Zahnstange

- 121: Zahnstangenmodul
- 122: Zahnrad
- 123: Motor

- X: erste Horizontalrichtung/Längsrichtung
- Y: zweite Horizontalrichtung/Querrichtung
- Z: Vertikalrichtung

## Patentansprüche

1. Lagerregal (10) mit einer Vielzahl von Regaleinheiten (20, 22), die übereinander liegende und beabstandete Behälterauflagen (16) aufweisen, die paarweise an sich gegenüberliegenden Seitenwänden (12) der Regaleinheiten (20, 22) zur Bildung von Lagerplätzen für Behälter (50 bis 53) angeordnet sind,
wobei die Behälter (50 bis 53) den Lagerplätzen mittels einer steuerbaren Transportvorrichtung (60) zustellbar oder entnehmbar sind,
wobei die Transportvorrichtung (60) wenigstens ein erstes Transportmittel (70) und ein zweites Transportmittel (80) aufweist, wobei das erste Transportmittel (70) in der Vertikalrichtung (Z) verfahrbar ist, und
sich das zweite Transportmittel (80) auf dem ersten Transportmittel (70) abstützt und bezüglich dem ersten Transportmittel (70) in einer ersten Horizontalrichtung (X) verfahrbar ist,
wobei eine Übergabevorrichtung (90) zur Handhabung von mehreren Behältern (50 bis 53) vorgesehen ist,
wobei die Übergabevorrichtung (90) an dem zweiten Transportmittel (80) angeordnet ist und mehrere Übergabeeinheiten (100, 102, 104, 106) zum Einlagern und Auslagern der Behälter (50 bis 53) umfasst, wobei jeder Übergabeeinheit (100, 102, 104, 106) ein Behälter (50 bis 53) zuordenbar ist und jede Übergabeeinheit (100, 102, 104, 106) separat ansteuerbar und bewegbar ist und
wobei die Übergabeeinheit (100, 102, 104, 106) derart beschaffen und eingerichtet ist, um den jeweiligen Behälter (50 bis 53) in einer zweiten Horizontalrichtung (Y) zu verfahren, die im Wesentlichen senkrecht zur ersten Horizontalrichtung (X) verläuft,
wobei wenigstens eine Bedienöffnung (30) zur Beschickung und Entnahme der Behälter (50 bis 53) vorgesehen ist, wobei die Bedienöffnung (30) derart dimensioniert ist, dass alle Behälter (50 bis 53) gleichzeitig ausgelagert und/oder eingelagert werden können.

2. Lagerregal nach Anspruch 1, **dadurch gekennzeichnet, dass** die Übergabevorrichtung aus mehreren modulartig lösbar miteinander verbindbaren Übergabeeinheiten (100, 102, 104, 106) ausgebildet ist, wobei die Anzahl der Übergabeeinheiten in Abhängigkeit von der Anzahl der Regaleinheiten variierbar ist.

3. Lagerregal nach Anspruch 1 oder 2, **dadurch gekennzeichnet, dass** das erste Transportmittel (70) aus mehreren lösbar miteinander verbundenen Transportmittelmodulen gebildet ist, deren Anzahl in Abhängigkeit von der Anzahl der Regaleinheiten variierbar ist.

4. Lagerregal nach einem der Ansprüche 1 bis 3, **dadurch gekennzeichnet, dass** die Anzahl der Übergabeeinheiten in Abhängigkeit von der Anzahl der Regaleinheiten und/oder in Abhängigkeit von der Anzahl der Transportmittelmodule variierbar ist.

5. Lagerregal nach einem der Ansprüche 1 bis 4, **dadurch gekennzeichnet, dass** die Übergabeeinheiten (100, 102, 104, 106) als Greifeinheiten und/oder Zieheinheiten ausgebildet sind.

6. Lagerregal nach einem der Ansprüche 1 bis 5, **dadurch gekennzeichnet, dass** die Übergabeeinheiten (100, 102, 104, 106) eingerichtet sind, um die Behälter (50 bis 53) zumindest gruppenweise synchron oder nacheinander ein- oder auszulagern.

7. Lagerregal nach einem der Ansprüche 1 bis 6, **dadurch gekennzeichnet, dass** vier Übergabeeinheiten (100, 102, 104, 106) vorgesehen sind, die vorzugsweise als Greifeinheiten ausgebildet sind.

8. Lagerregal nach einem der Ansprüche 1 bis 7, **dadurch gekennzeichnet, dass** im Bereich der Bedienöffnung (30) eine Höhenmesseinrichtung (40) zur Höhenmessung der Behälter (50 bis 53) vorgesehen ist.

9. Lagerregal nach einem der Ansprüche 1 bis 8, **dadurch gekennzeichnet, dass** im Bereich der Bedienöffnung (30) eine Verschlusseinrichtung zum Öffnen und Schließen der Bedienöffnung (30), insbesondere ein Schnelllauftor, vorgesehen ist.

10. Lagerregal nach einem der Ansprüche 1 bis 9, **dadurch gekennzeichnet, dass** die Behälterauflagen (16) rasterartig an den Seitenwänden (12) vorgesehen sind.

11. Lagerregal nach einem der Ansprüche 1 bis 10, **dadurch gekennzeichnet, dass** die Behälterauflagen (16) mäanderförmig in die Seitenwände (12) eingepresst sind.

12. Lagerregal nach einem der Ansprüche 1 bis 11, **dadurch gekennzeichnet, dass** die Behälterauflagen (16) Nuten (17) aufweisen, in die Auflagerstege (58) der Behälter (50 bis 53) ein- und ausführbar sind.

13. Lagerregal nach einem der Ansprüche 1 bis 12, **dadurch gekennzeichnet, dass** das erste Transportmittel (70), das zweite Transportmittel (80) und/oder die Übergabeeinheiten (100, 102, 104, 106) mittels eines Zahnradantriebes und/oder eines Kettenantriebes verfahrbar sind.

## Claims

1. Storage rack (10) having a plurality of rack units (20, 22) with container supports (16) spaced one above the other, said supports being disposed in pairs on opposite side walls (12) of the rack units (20, 22) to form storage locations for containers (50 to 53),
wherein the containers (50 to 53) can be placed in or removed from the storage locations by means of a controllable transport device (60),
wherein the transport device (60) has at least one first transport means (70) and one second transport means (80), wherein the first transport means (70) is able to move in the vertical direction (Z), and
the second transport means (80) is supported on the first transport means (70) and is able to move in a first horizontal direction (X) relative to the first transport means (70),
wherein a transfer device (90) for handling a number of containers (50 to 53) is provided,
wherein the transfer device (90) is arranged on the second transport means (80) and comprises a number of transfer units (100, 102, 104, 106) for placing the containers (50 to 53) into and removing them from stock,
wherein each transfer unit (100, 102, 104, 106) can be associated with one container (50 to 53) and each transfer unit (100, 102, 104, 106) can be controlled and moved separately and
wherein the transfer unit (100, 102, 104, 106) is configured and arranged in such a way to be able to move each container (50 to 53) in a second horizontal direction (Y) which is essentially perpendicular to the first horizontal direction (X),
wherein at least one operating hatch (30) for submitting and retrieving the containers (50 to 53) is provided, wherein the operating hatch (30) is dimensioned in such a way that all the containers (50 to 53) can be placed into and/or removed from stock simultaneously.

2. Storage rack according to claim 1, **characterised in that** the transfer device is made up of a number of modular transfer units (100, 102, 104, 106) which can be joined to each other detachably wherein the number of transfer units is variable depending on the number of storage units.

3. Storage rack according to claim 1 or 2, **characterised in that** the first transport means (70) is made up of a number of transport-means modules joined to each other detachably and the number of said modules is variable depending on the number of storage units.

4. Storage rack according to one of the claims 1 to 3, **characterised in that** the number of transfer units is variable depending on the number of storage units and/or depending on the number of transport-means modules.

5. Storage rack according to one of the claims 1 to 4, **characterised in that** the transfer units (100, 102, 104, 106) are configured as gripping units and/or pulling units.

6. Storage rack according to one of the claims 1 to 5, **characterised in that** the transfer units (100, 102, 104, 106) are arranged to be able to place the containers (50 to 53) into stock or to remove them at least in groups synchronously or successively.

7. Storage rack according to one of the claims 1 to 6, **characterised in that** four transfer units (100, 102, 104, 106) are provided which are preferably configured as gripping units.

8. Storage rack according to one of the claims 1 to 7, **characterised in that** in the vicinity of the operating hatch (30) there is a height-measuring device (40) for measuring the height of the containers (50 to 53).

9. Storage rack according to one of the claims 1 to 8, **characterised in that** a shutter device is provided in the area of the operating hatch (30) for opening and closing the operating hatch (30), in particular a high-speed door.

10. Storage rack according to one of the claims 1 to 9, **characterised in that** the container supports (16) are provided in a grid-like array on the side walls (12).

11. Storage rack according to one of the claims 1 to 10, **characterised in that** the container supports (16) are pressed in a meandering shape into the side walls (12).

12. Storage rack according to one of the claims 1 to 11, **characterised in that** the container supports (16) have grooves (17) into and out of which the support bars (58) of the containers (50 to 53) can be guided.

13. Storage rack according to one of the claims 1 to 12, **characterised in that** the first transport means (70), the second transport means (80) and/or the transfer units (100, 102, 104, 106) can be moved by means of a rack and pinion drive and/or a chain drive.

## Revendications

1. Rayonnage de stockage (10) comprenant une pluralité d'unités de rayonnages (20, 22) qui comprennent des supports de récipients (16) disposés les uns au-dessus des autres et écartés, qui sont agencées par paires sur des parois latérales mutuellement opposées (12) des unités de rayonnages (20, 22) pour former des emplacements de stockage pour des récipients (50 à 53),
dans lequel les récipients (50 à 53) peuvent être amenés aux emplacements de stockage ou enlevés de ceux-ci au moyen d'un dispositif de transport commandé (60),
dans lequel le dispositif de transport (60) comprend un premier moyen de transport (70) et un second moyen de transport (80), dans lesquels le premier moyen de transport (70) est déplaçable dans la direction verticale (Z), et
le second moyen de transport (80) s'appuie sur le premier moyen de transport (70) et est déplaçable par rapport au premier moyen de transport (70) dans une première direction horizontale (X),
il est prévu un dispositif de transfert (90) pour la manutention de plusieurs récipients (50 à 53),
dans lequel le dispositif de transfert (90) est agencé sur le second moyen de transport (80) et comprend plusieurs unités de transfert (100, 102, 104, 106) pour introduire et extraire les récipients (50 à 53),
dans lequel un récipient (50 à 53) peut être associé à chaque unité de transfert (100, 102, 104, 106), et chaque unité de transfert (100, 102, 104, 106) est susceptible d'être pilotée et déplacée séparément, et
dans lequel l'unité de transfert (100, 102, 104, 106) est conçue et réalisée de manière à déplacer le récipient respectif (50 à 53) dans une seconde direction horizontale (Y), qui s'étend sensiblement perpendiculairement à la première direction horizontale (X),
dans lequel il est prévu au moins une ouverture de service (30) pour le chargement et l'enlèvement des récipients (50 à 53), et l'ouverture de service (30) présente des dimensions telles que tous les récipients (50 à 53) peuvent être sortis et/ou introduits simultanément.

2. Rayonnage de stockage selon la revendication 1, **caractérisé en ce que** le dispositif de transfert est réalisé à partir de plusieurs unités de transfert (100, 102, 104, 106) susceptibles d'être reliées les unes aux autres de façon détachable à la manière de modules, et le nombre des unités de transfert est variable en fonction du nombre des unités de rayonnages.

3. Rayonnage de stockage selon la revendication 1 ou 2, **caractérisé en ce que** le premier moyen de transport (70) est formé de plusieurs modules de moyens de transport reliés de façon détachable les uns aux autres, dont le nombre est variable en fonction du nombre des unités de rayonnages.

4. Rayonnage de stockage selon l'une des revendications 1 à 3, **caractérisé en ce que** le nombre des unités de transfert est variable en fonction du nombre des unités de rayonnages et/ou en fonction du nombre des modules de moyens de transport.

5. Rayonnage de stockage selon l'une des revendications 1 à 4, **caractérisé en ce que** les unités de transfert (100, 102, 104, 106) sont réalisées comme des unités de préhension et/ou des unités de traction.

6. Rayonnage de stockage selon l'une des revendications 1 à 5, **caractérisé en ce que** les unités de transfert (100, 102, 104, 106) sont conçues pour introduire ou extraire les récipients (50 à 53) au moins par groupes de façon synchrone ou les uns après les autres.

7. Rayonnage de stockage selon l'une des revendications 1 à 6, **caractérisé en ce qu'**il est prévu quatre unités de transfert (100, 102, 104, 106), qui sont réalisées de préférence comme des unités de préhension.

8. Rayonnage de stockage selon l'une des revendications 1 à 7, **caractérisé en ce qu'**un système de mesure de hauteur (40) pour la mesure de la hauteur des récipients (50 à 53) est prévu dans la région de l'ouverture de service (30).

9. Rayonnage de stockage selon l'une des revendications 1 à 8, **caractérisé en ce qu'**un système d'obturation pour ouvrir et fermer l'ouverture de service (30), en particulier une porte à déplacement rapide, est prévu dans la région de l'ouverture de service (30).

10. Rayonnage de stockage selon l'une des revendications 1 à 9, **caractérisé en ce que** les supports de récipients (16) sont prévus de manière tramée sur les parois latérales (12).

11. Rayonnage de stockage selon l'une des revendications 1 à 10, **caractérisé en ce que** les supports de récipients (16) sont enfoncés à la presse en formant des méandres dans les parois latérales (12).

12. Rayonnage de stockage selon l'une des revendications 1 à 11, **caractérisé en ce que** les supports de récipients (16) comportent des rainures (17) dans lesquelles des barrettes d'appui (58) des récipients (50 à 53) peuvent être introduites et extraites.

13. Rayonnage de stockage selon l'une des revendications 1 à 12, **caractérisé en ce que** le premier moyen de transport (70), le second moyen de transport (80) et/ou les unités de transfert (100, 102, 104, 106) sont déplaçables au moyen d'un entraînement à roues dentées et/ou d'un entraînement à chaîne.
